# EUROPÄISCHE PATENTANMELDUNG

(11) **EP 2 933 137 A1**
(43) Veröffentlichungstag der Anmeldung: **21.10.2015**
(21) Anmeldenummer: 15466003.9
(22) Anmeldetag: 16.04.2015
(51) Int. Cl.: B60N 3/10, B60N 2/46

(54) **GETRÄNKEHALTER**

(30) Priorität: 18.04.2014 CZ 20140268
(71) Anmelder: Skoda Auto a.s., 293 60 Mladá Boleslav (CZ)
(72) Erfinder: Macku, Michal, 293 01 Mladá Boleslav (CZ); Doricák, Radim, 293 01 Mladá Boleslav (CZ)

(57) **Zusammenfassung**

Der offenbarte Getränkehalter (1) ist im vorderen Abschnitt einer Armlehne (2) insbesondere einer Rücksitzbank angeordnet. Der Getränkehalter (1) besteht aus einem festen Teil (3) und einem schwenkbaren Teil (4). Der feste Teil (3) weist die erste abgerundete Stützfläche (5) und der schwenkbare Teil (4) die zweite abgerundete Stützfläche (6) auf, die an der Abdeckung (7) des schwenkbaren Teils (4) ausgebildet ist. Die erste abgerundete Stützfläche (5) und die zweite abgerundete Stützfläche (6) bilden einen Kegel (8), welcher der Form des Trinkgefäßes entspricht.

Die Erfindung liegt darin, dass der Kegel (8) in der Auswärtsrichtung aus dem Getränkehalter (1) ausgebildet ist, wodurch eine Abstützung des Trinkgefäßes über der oberen Fläche der Armlehne (2) ermöglicht wird. Der Durchmesser der ersten abgerundeten Stützfläche (5) des festen Teils (3) ist kleiner als der Durchmesser der zweiten abgerundeten Stützfläche (6) des schwenkbaren Teils (4).

## Beschreibung

### Technisches Gebiet

Die Erfindung betrifft einen in der Armlehne angeordneten Getränkehalter, der ein Trinkgefäßes komfortabel festhalten kann.

### Bisheriger Stand der Technik

Im Dokument EP2578449 ist eine Aufbewahrungsvorrichtung für einen Fahrzeugsitz beschrieben, die einen Hauptkörper und eine Abdeckung umfasst. Der Hauptkörper umfasst zwei abgerundete Oberflächen und die Abdeckung umfasst auch zwei abgerundete Oberflächen, die gegenüber den abgerundeten Oberflächen des Hauptkörpers angeordnet sind Die abgerundete Oberfläche des Hauptkörpers bildet zusammen mit der abgerundeten Oberfläche der Abdeckung einen imaginären Kegel, der der Form des Trinkgefäßes entspricht. Die abgerundete Oberfläche der Abdeckung ist kleiner als die abgerundete Oberfläche des Hauptkörpers und innerhalb der abgerundeten Oberfläche des Hauptkörpers angeordnet. Daraus geht hervor, dass der durch die beiden abgerundeten Flächen gebildete Kegel im Inneren der als Getränkehalter dienenden Aufbewahrungsvorrichtung angeordnet ist. Der schwenkbare Teil des Kegels fügt sich in den Innenteil des festen Teil des Kegels ein. Der Nachteil dieser inneren Anordnung des Kegels liegt darin, dass die Variabilität und Erweiterungsmöglichkeit des Kegels für den Bedarf der Aufnahme größerer Trinkgefäße eingeschränkt wird. Diese Anordnung ist zwar von Vorteil bei größeren Einbauräumen, jedoch bei flacheren Einbauräumen, wenn die Anordnung des Getränkehalters durch die geringere Höhe beschränkt ist, kann diese um den Bedarf des Benutzers zu erfüllen problematisch sein und der so gebildeter Kegel würde die Schaffung der notwendigen Stützflächen für ein größeres Trinkgefäß nicht ermöglichen.

### Darstellung der Erfindung

Die Aufgabe wird durch den erfindungsgemäßen Getränkehalter nach Anspruch 1 gelöst, der im vorderen Abschnitt der Armlehne an der Fahrzeugrücksitzbank angeordnet ist. Dieser Getränkehalter ist für die Verwendung bei flacheren Armlehnen ausgelegt, die wegen des beschränkten Einbauraumes so ausgestaltet sind. Für diese Art der flachen Armlehnen kann die im Stand der Technik genannte Lösung mit einem einwärts gerichteten Kegel nicht verwendet werden. Der Getränkehalter der Armlehne an der Rücksitzbank besteht aus einem festen Teil mit der ersten abgerundeten Stützfläche und aus einem schwenkbaren Teil mit der zweiten abgerundeten Stützfläche. Die zweite abgerundete Stützfläche ist an der Abdeckung des schwenkbaren Teils ausgebildet. Die erste abgerundete Stützfläche und die zweite abgerundete Stützfläche bilden einen Kegel, welcher der Form des Trinkgefäßes entspricht.

Die Darstellung der Erfindung liegt darin, dass der Kegel in der Auswärtsrichtung aus dem Getränkehalter ausgebildet ist, was die Abstützung des Trinkgefäßes über der Oberfläche der Armlehne ermöglicht. Der Durchmesser der ersten abgerundeten Stützfläche des festen Teils ist kleiner als der Durchmesser der zweiten abgerundeten Stützfläche des schwenkbaren Teils. Die Mittellinie des Kegels befindet sich außerhalb der Schwenkachse des schwenkbaren Teils und ist von der Schwenkachse des schwenkbaren Teils in der Auswärtsrichtung aus dem Getränkehalter angeordnet, d.h. von der Schwenkachse nach vorwärts aus der Armlehne gerichtet.

Der feste Teil des Getränkehalters umfasst eine Schrägfläche, die für das genaue Aufsetzen der Abdeckung des schwenkbaren Teils auf diese Schrägfläche ausgebildet ist und zwar so, dass die äußere Oberfläche der Abdeckung des schwenkbaren Teils auf gleicher Ebene mit der oberen Fläche der Armlehne liegt und mit dieser oberen Fläche bündig ist.

### Übersicht der Figuren der Zeichnungen

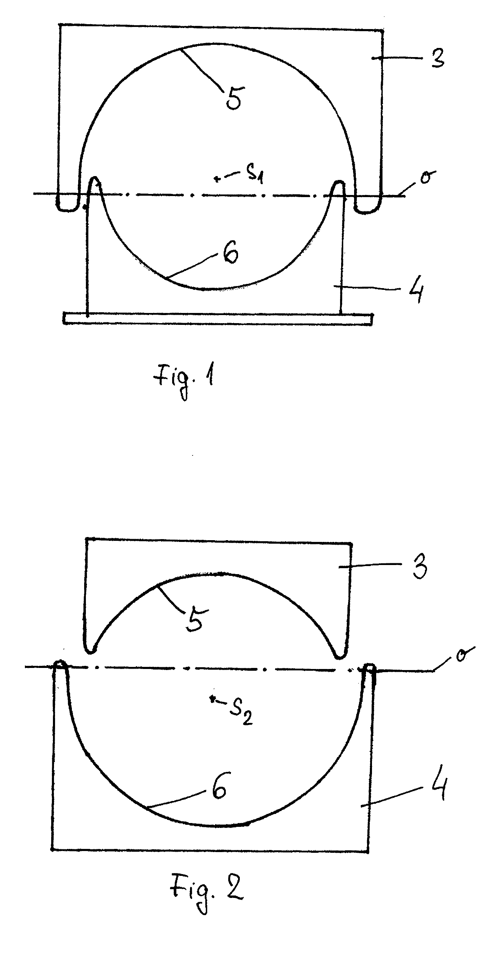

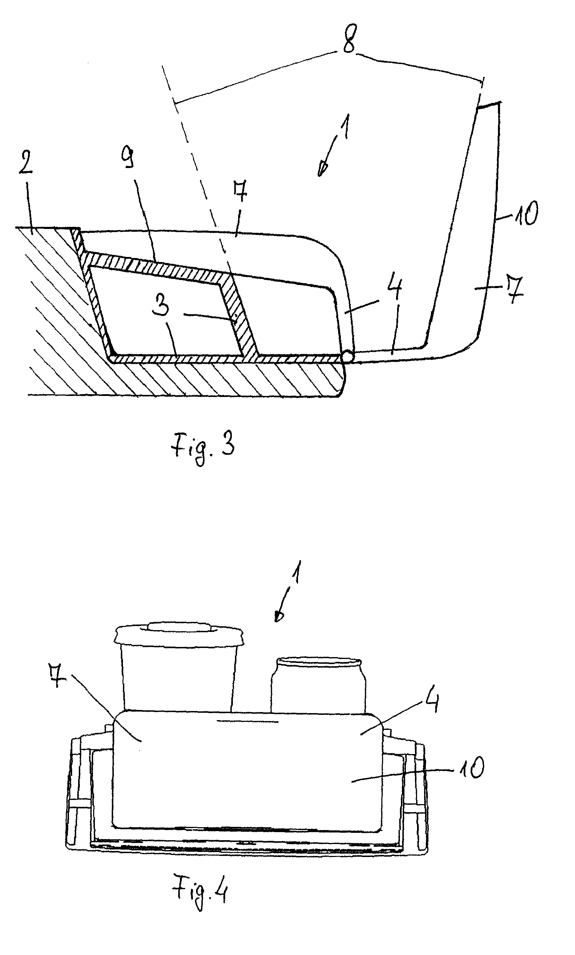

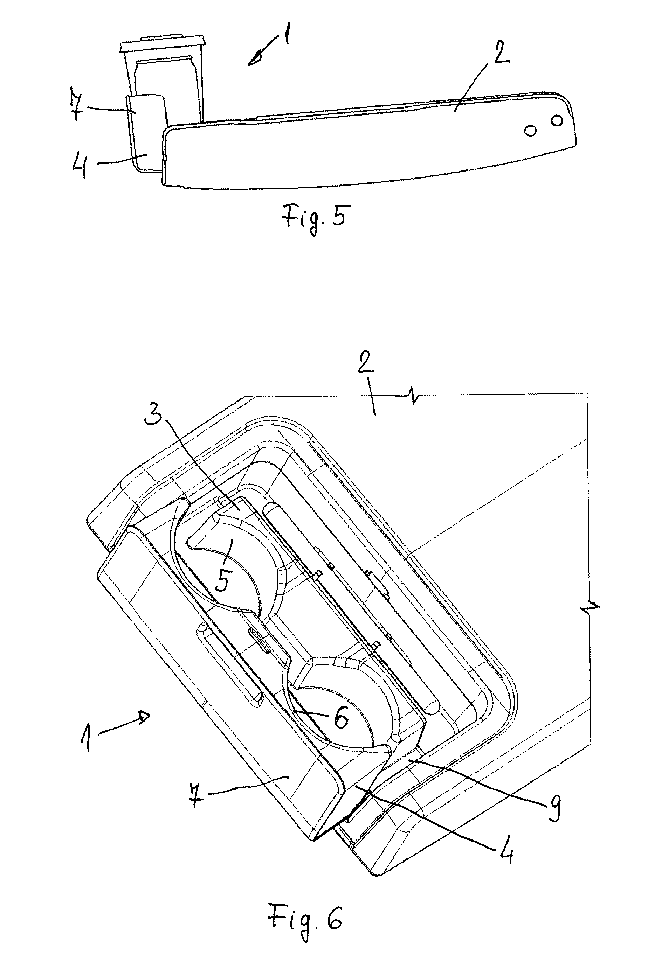

Die Fig. 1 zeigt den Stand der Technik, wo die abgerundete Stützfläche der Abdeckung (des schwenkbaren Teils) der Aufbewahrungsvorrichtung (des Getränkehalters) kleiner als die abgerundete Stützfläche des Hauptkörpers (des festen Teils) der Aufbewahrungsvorrichtung (des Getränkehalters) ist und der Kegel einwärts angeordnet ist, die Fig. 2 zeigt den erfindungsgemäßen Getränkehalter, wo die abgerundete Stützfläche des schwenkbaren Teils größer als die abgerundete Stützfläche des festen Teils ist und der Kegel in der Auswärtsrichtung angeordnet ist, die Fig. 3 zeigt die Seitenansicht des Getränkehalters, die Fig. 4 zeigt die Frontansicht des Getränkehalters, die Fig. 5 zeigt die Seitenansicht des Getränkehalters, die Fig. 6 zeigt eine perspektivische Ansicht des Getränkehalters.

### Ausführungsbeispiel der Erfindung

Die Fig. 2 bis 6 zeigen den Getränkehalter 1, der im vorderen Abschnitt der Armlehne 2 an der Fahrzeugrücksitzbank angeordnet ist. Der Getränkehalter 1 umfasst einen festen Teil 3 und einen schwenkbaren Teil 4. Der feste Teil 3 weist die erste abgerundete Stützfläche 5 auf. Der schwenkbare Teil 4 umfasst eine Abdeckung 7, auf der die zweite abgerundete Stützfläche 6 ausgebildet ist. Die erste abgerundete Stützfläche 5 und die zweite abgerundete Stützfläche 6 bilden einen imaginären schwenkbaren Kegel 8, welcher der Form des Trinkgefäßes entspricht. Der Kegel 8 ist in der Auswärtsrichtung aus dem Getränkehalter 1 ausgebildet. Die Mittellinie S₂ des Kegels 8 befindet sich in der Vorwärtsrichtung von der Schwenkachse o des schwenkbaren Teils 4. Der Durchmesser der ersten abgerundeten Stützfläche 5 des festen Teils 3 ist kleiner als der Durchmesser der zweiten abgerundeten Stützfläche 6 des schwenkbaren Teils 4.

Der feste Teil 3 des Getränkehalters 1 umfasst eine Schrägfläche 9. Die Schrägfläche 9 ist für das genaue Aufsetzen der Abdeckung 7 des schwenkbaren Teils 4 auf diese Schrägfläche 9 ausgebildet und zwar so, dass die äußere Oberfläche 10 der Abdeckung 7 des schwenkbaren Teils 4 auf gleicher Ebene mit der oberen Fläche der Armlehne 2 liegt und mit dieser oberen Fläche der Armlehne 2 bündig ist.

Da der Kegel 8 in der Auswärtsrichtung aus dem Getränkehalter 1 ausgebildet ist, wird eine Abstützung des Trinkgefäßes über der oberen Fläche der Armlehne 2 ermöglicht.

Dieser Getränkehalter 1 ist für die Verwendung bei flacheren Armlehnen ausgelegt, die wegen des beschränkten Einbauraumes so ausgestaltet sind.

### Verwendete Bezeichnungen

- 1: Getränkehalter der Armlehne
- 2: Armlehne der Rücksitzbank
- 3: fester Teil des Getränkehalters
- 4: schwenkbarer Teil des Getränkehalters
- 5: erste abgerundete Stützfläche des festen Teils
- 6: zweite abgerundete Stützfläche des schwenkbaren Teils
- 7: Abdeckung des schwenkbaren Teils
- 8: Kegel in Form des Trinkgefäßes
- 9: Schrägfläche des festen Teils
- 10: obere Fläche der Abdeckung des schwenkbaren Teils
- o: Schwenkachse des schwenkbaren Teils
- S₁: Mittellinie des in der Einwärtsrichtung im Getränkehalter ausgebildeten Kegels
- S₂: Mittellinie des in der Auswärtsrichtung aus dem Getränkehalter ausgebildeten Kegels

## Patentansprüche

1. Getränkehalter (1), der im vorderen Abschnitt der Armlehne (2) insbesondere der Rücksitzbank angeordnet ist und aus einem festen Teil (3) mit der ersten abgerundeten Stützfläche (5) und aus einem schwenkbaren Teil (4) mit der zweiten abgerundeten Stützfläche (6) besteht, die an der Abdeckung (7) des schwenkbaren Teils (4) ausgebildet ist, wobei die erste abgerundete Stützfläche (5) und die zweite abgerundete Stützfläche (6) einen Kegel (8) bilden, welcher der Form des Trinkgefäßes entspricht, **dadurch gekennzeichnet, dass** der Kegel (8) in der Auswärtsrichtung aus dem Getränkehalter (1) ausgebildet ist, wodurch eine Abstützung des Trinkgefäßes über der oberen Fläche der Armlehne (2) geschaffen wird.

2. Getränkehalter (1) nach Anspruch 1 **dadurch gekennzeichnet, dass** der Durchmesser der ersten abgerundeten Stützfläche (5) des festen Teils (3) kleiner ist als der Durchmesser der zweiten abgerundeten Stützfläche (6) des schwenkbaren Teils (4).

3. Getränkehalter (1) nach vorgenannten Ansprüchen **dadurch gekennzeichnet, dass** die Mittellinie (S₂) des Kegels (8) außerhalb der Schwenkachse (o) des schwenkbaren Teils (4) verläuft und von der Schwenkachse (o) des schwenkbaren Teils (4) in der Auswärtsrichtung aus dem Getränkehalter (1) der Armlehne (2) angeordnet ist.

4. Getränkehalter (1) nach vorgenannten Ansprüchen **dadurch gekennzeichnet, dass** der feste Teil (3) eine Schrägfläche (9) umfasst, die für das genaue Aufsetzen der Abdeckung (7) des schwenkbaren Teils (4) ausgebildet ist und zwar so, dass die äußere Oberfläche (10) der Abdeckung (7) des schwenkbaren Teils (4) auf gleicher Ebene mit der oberen Fläche der Armlehne (2) liegt.

5. Getränkehalter (1) nach vorgenannten Ansprüchen **dadurch gekennzeichnet, dass** die äußere Oberfläche (10) der Abdeckung (7) des schwenkbaren Teils (4) mit der oberen Fläche der Armlehne (2) bündig ist.
